(19) Europäisches Patentamt

European Patent Office

Office européen des brevets

(11) **EP 1 393 314 B1**

(12) **EUROPEAN PATENT SPECIFICATION**

(45) Date of publication and mention
of the grant of the patent:
**26.07.2006 Bulletin 2006/30**

(51) Int Cl.:
***G11B 20/00*** (2006.01)

(21) Application number: **02724542.2**

(22) Date of filing: **19.04.2002**

(86) International application number:
**PCT/IB2002/001418**

(87) International publication number:
**WO 2002/091375 (14.11.2002 Gazette 2002/46)**

(54) **WATERMARKING**

WASSERZEICHEN

REALISATION D'UN FILIGRANE

(84) Designated Contracting States:
**AT BE CH CY DE DK ES FI FR GB GR IE IT LI LU MC NL PT SE TR**

(30) Priority: **08.05.2001 EP 01201687**

(43) Date of publication of application:
**03.03.2004 Bulletin 2004/10**

(73) Proprietor: **Koninklijke Philips Electronics N.V.
5621 BA Eindhoven (NL)**

(72) Inventors:
• **VAN DER VEEN, Minne**
NL-5656 AA Eindhoven (NL)
• **BRUEKERS, Alphons, A., M., L.**
NL-5656 AA Eindhoven (NL)
• **HAITSMA, Jaap, A.**
NL-5656 AA Eindhoven (NL)
• **KALKER, Antonius, A., C., M.**
NL-5656 AA Eindhoven (NL)

(74) Representative: **Groenendaal, Antonius W. M.
Philips
Intellectual Property & Standards
P.O. Box 220
5600 AE Eindhoven (NL)**

(56) References cited:
**WO-A-91/16769**

• **TACHIBANA R ET AL: "An audio watermarking method robust against time- and frequency-fluctuation" SECURITY AND WATERMARKING OF MULTIMEDIA CONTENTS III, SAN JOSE, CA, USA, 22-25 JAN. 2001, vol. 4314, pages 104-115, XP008006070 Proceedings of the SPIE - The International Society for Optical Engineering, 2001, SPIE-Int. Soc. Opt. Eng, USA ISSN: 0277-786X cited in the application**
• **WU C-P ET AL: "ROBUST AUDIO WATERMARKING FOR COPYRIGHT PROTECTION" PROCEEDINGS OF THE SPIE, SPIE, BELLINGHAM, VA, US, vol. 3807, July 1999 (1999-07), pages 387-397, XP000980049**
• **PRINCEN J P ET AL: "SUBBAND/TRANSFORM CODING USING FILTER BANK DESIGNS BASED ON TIME DOMAIN ALIASING CANCELLATION" INTERNATIONAL CONFERENCE ON ACOUSTICS, SPEECH & SIGNAL PROCESSING. ICASSP. DALLAS, APRIL 6 - 9, 1987, NEW YORK, IEEE, US, vol. 4 CONF. 12, 6 April 1987 (1987-04-06), pages 2161-2164, XP000560572**

**Description**

This invention relates to a method of embedding a watermark in an information signal (x(n)), the method comprising the steps of

applying a sequence of segmentation window functions to the information signal to obtain a first sequence of segments of the information signal, where each segmentation window function has a predetermined length and a predetermined shape;

embedding a predetermined watermark in at least a first segment of the first sequence of segments resulting in a sequence of watermark segments;

combining the watermark segments of the sequence of watermark segments to a watermark signal using a sequence of reconstruction window functions, and

combining the watermark signal with the information signal to obtain a watermarked information signal.

Such a method is known from WuC-P et al: "Robust audio watermarking for copyright protection", Proceedings of the SPIE, SPIE, Belligham, VA, US, vol. 3807, July 1999, pages 387-397.

In recent years, an increasing trend towards the use and distribution of digital multimedia data has led to an increased need for adequate copy protection, copyright protection, and ownership verification of such data.

Digital watermarking is an emerging technology that may be used for a variety of purposes, such as proof of copyright ownership, tracing of illegal copies, controlling copy control equipment, broadcast monitoring, authenticity verification, adding auxiliary information into multimedia signals, etc.

A watermark is a label which is embedded in an information signal by slightly modifying samples of the signal. Preferably, a watermarking scheme should be designed such that the watermark is imperceptible, i.e. that it does not affect the quality of the information signal significantly. In many applications, the watermark should further be robust, i.e. it should still be reliably detectable after possible signal processing operations.

Though many schemes of watermarking of still images and video have been published, there is relatively little literature on audio watermarking. Most of the published techniques employ methods such as echo-hiding or noise addition, exploiting temporal and/or spectral masking models of the human auditory system.

It is known to embed a watermark in an information signal by segmenting an information signal into frames via rectangular window functions, Fourier transforming the individual frames, slightly modifying the resulting Fourier components of each of the frames, and inverse Fourier transforming the modified coefficients, resulting in a watermark signal in the time domain. Finally, the watermark signal is scaled and added to the information signal.

However, the segmentation of the information signal involves the problem that watermarking artefacts may occur at the frame boundaries. In the case of an audio signal; these artefacts may be perceived as clicking sounds by a listener.

It is another disadvantage of the segmentation that the detection of the watermark is sensitive to the synchronisation of the frames during embedding and detection. When the frames defined in the embedding and detection algorithms, respectively, are not in phase, the detection performance may decrease.

The article "An audio watermarking method robust against time- and frequency-fluctuation" by Ryuki Tachibana et al., in proceedings of the conference on Electronic Imaging, "Security and Watermarking of Multimedia Contents III (EI27)", San José, USA, 21-26 January 2001, discloses an audio watermarking algorithm using windowing and overlapping frames in the time-frequency plane of the signal content, where each frame used during the segmentation and reconstruction of the signal overlaps the adjacent frames by half a window. The article of Wu et al. discloses a similar system, but without overlapping frames.

However, the above prior art method involves the problem that, even in the case of overlapping windows, both the segmentation and the reconstruction processes introduce artefacts at the boundaries between segments. These artefacts may cause perceptible distortions. For example, blocking artefacts may occur at frame boundaries causing amplitude discontinuities which may be observed as annoying distortions by the human auditory system. In the following, the segments will also be referred to as frames.

The above problem of the above-mentioned prior art method is solved by a method of the above-mentioned type, characterized in that two successive segmentation window functions overlap by a predetermined overlap length, and that the segmentation window function ($h_a(n)$) and the reconstruction window function ($h_r(n)$) are selected individually and fulfil the condition:

$$\sum_s h_a[n-s(1-v)N]^2 \cdot h_r[n-s(1-v)N]^2 = 1,$$

wherein s is the segment index, $v$ the overlap parameter and N the segment size.

Consequently, as the shapes of the segmentation windows and the reconstruction windows are selected individually, they may be adapted to supplement the effect of each other, thereby reducing the total distortions introduced during the segmentation and construction processes.

It is an advantage of the invention that it reduces artefacts, such as blocking effects, introduced at the boundaries of the signal frames, thereby increasing the imperceptibility of a watermark.

It is a further advantage of the invention that it enhances the detection performance of a watermark detection algorithm.

It is a further advantage of the invention that it yields a watermark which is robust against signal processing operations, i.e. the watermark may still be detected in a signal, even after the signal has been subject to such operations. In the field of audio signals, examples of such processing operations include compression, cropping, D/A and A/D conversion, equalization, temporal scaling, group delay distortions, filtering, and removal or insertion of samples.

When the segmentation window functions and the reconstruction window functions fulfil a predetermined complementary condition, pairs of complementary window functions may be constructed, such that specific characteristics of a watermark or watermarking algorithm may be exploited in the specification of a suitable complementary condition, thereby reducing algorithm-specific distortions at the frame boundaries.

In a preferred embodiment of the invention the segmentation window functions and the reconstruction window functions are constructed from a prototype window function and shaped according to at least one shape parameter. Consequently, the shape of the window functions may be adapted via said shape parameter while the fulfilment of said complementary condition is ensured. Hence, the segmentation and reconstruction characteristics may be optimised by varying a tuneable parameter, thereby facilitating the adaptation of the window functions to a given watermark application.

Another tuneable parameter is the length by which neighbouring windows overlap. The overlap may be varied between complete overlap to no overlap.

In a further preferred embodiment of the invention, the respective shapes of at least a first segmentation window function and at least a first reconstruction window function are adapted in response to the information signal, thereby allowing an adaptive switching between windows of different shapes, e.g. switching between long and short frames at locations of an audio signal where transients are present. Consequently, the effects of distortions introduced by transients in an information signal may be reduced.

The invention further provides an arrangement for embedding a watermark, a device for transmitting an information signal comprising such an arrangement for embedding a watermark, an information signal having an embedded watermark, a storage medium having recorded thereon such a signal, and an arrangement for detecting a watermark in such an information signal. The above-mentioned aspects of the invention are disclosed in the independent claims. As the advantages and preferred embodiments of these aspects of the invention correspond to the advantages and preferred embodiments of the method described above and in the following, these will not be repeated here.

The invention will be explained more fully below in connection with preferred embodiments and with reference to the drawings, in which:

fig. 1a shows a schematic view of an arrangement for embedding a watermark according to a first embodiment of the invention;
fig. 1b shows a schematic view of an example of the watermark calculation module of the embodiment of fig. 1a;
fig. 2 shows a schematic view of a method of embedding a watermark according to an embodiment of the invention;
figs. 3a-e show examples of window functions with overlap $v=0.5$;
figs. 4a-e show examples of window functions with overlap $v=0.25$;
fig. 5 shows an example of adaptively switched window functions; and
fig. 6 shows a schematic view of an arrangement for embedding a watermark according to a second embodiment of the invention.

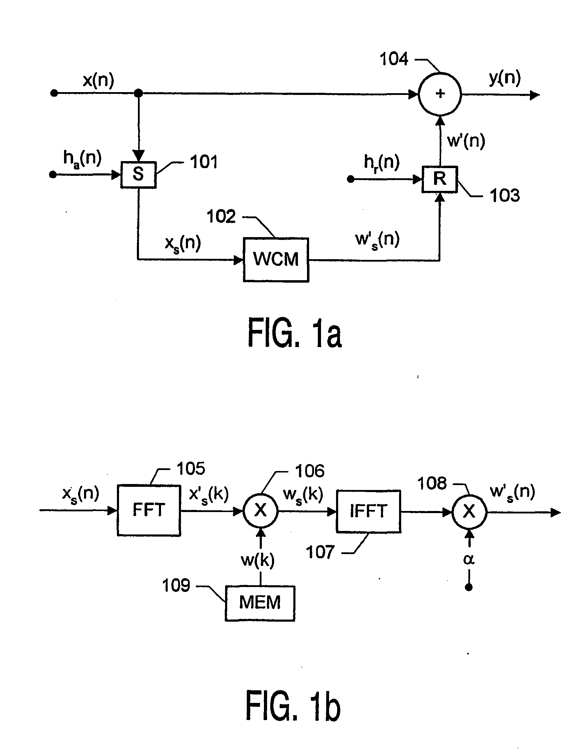

Fig. 1a shows a schematic view of an arrangement for embedding a watermark according to an embodiment of the invention. The arrangement comprises a division circuit 101 which divides the incoming information signal, e.g. a digital audio signal, x(n) into segments by multiplying the audio signal x(n) by shifted versions of a segmentation window $h_a(n)$, in the following also called analysis window. The resulting segments may be indexed by a segment number s and written as

$$x_s(n) = x(n) \cdot h_a[n-s(1-v)\cdot N],$$

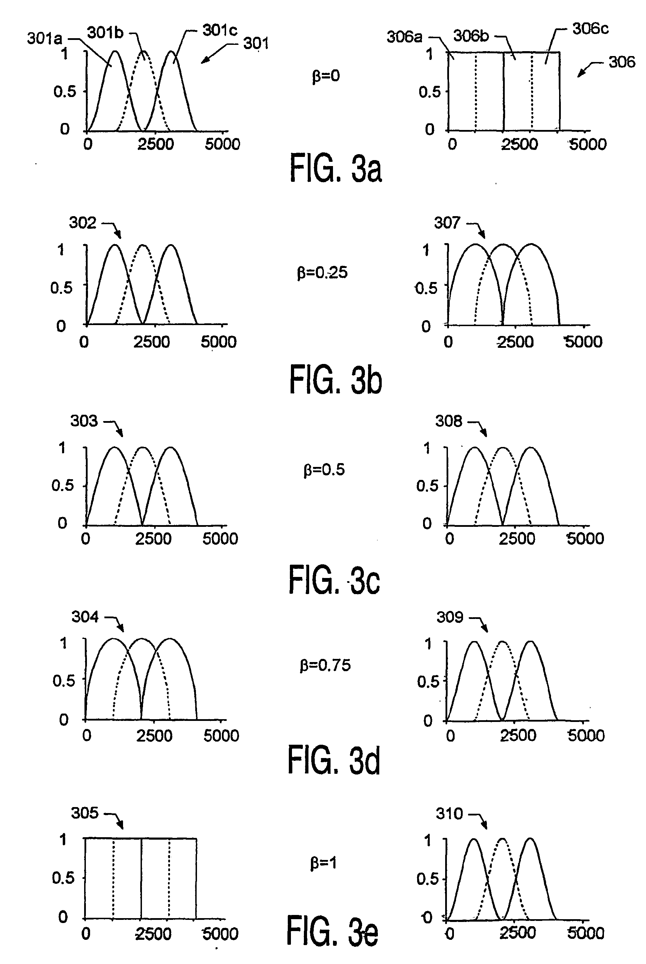

where N is the length of the window function. The segment size N is a trade-off between detection performance and audibility. A large segment size is desired for detection robustness, while a short segment size is desired for a better adaptation of the embedding to local properties of the audio signal. For example, N may be 2048 samples. According to the invention, neighbouring segments may overlap by a fraction $\nu$ of the segment size N, where $\nu \in [0;1[$. The case $\nu=0$, for example, corresponds to no overlap, and a value $\nu=0.5$ indicates an overlap of half the segment size N. Small values of $\nu$ correspond to a decreased computational complexity compared to large values of $\nu$. Examples of the functional form of the analysis window $h_a(n)$ will be described in connection with figs. 3a-e. The resulting segments $x_s(n)$ are applied to a watermark calculation module 102 which calculates a watermark $w_s'(n)$ for each segment. The method implemented by the watermark calculation module 102 may be a known method of generating a watermark. Preferably, the watermark is weighted according to a perceptual model of the human auditory system. An advantageous technique will be described in connection with fig. 1b. Subsequently, the watermarks $w_s'(n)$ are applied to a reconstruction circuit 103 which generates the final watermark $w'(n)$ as a sum of the watermarks $w_s'(n)$ multiplied by a shifted version of a reconstruction window $h_r(n)$, according to

$$w'(n) = \sum_s w_s'(n) \cdot h_r[n - s(1-\nu)\cdot N].$$

According to the invention, the functional form of the reconstruction window is chosen to supplement the effect of the analysis window in reducing the total distortions introduced during segmentation and construction. Finally, the watermark $w'(n)$ is added to the original audio signal $x(n)$ by the summing circuit 104 to obtain the watermarked audio signal $y(n) = x(n) + w'(n)$. Alternatively, the watermark signal $w'(n)$ may be combined with the audio signal $x(n)$ using a different function, e.g. a subtraction or an XOR function in the case of a 1-bit audio format.

The subsequent watermark detection may, for example, use a Symmetrical Phase Only Matched Filtering (SPOMF) technique where the detection algorithm also comprises a segmentation of the signal to be analysed.

Fig. 1b shows a schematic view of an example of the watermark calculation module 102 of the embodiment of fig. 1a. The watermark calculation module 102 comprises a Fast Fourier Transform circuit 105 which transforms the signal segments $x_s(n)$ to the Fourier domain, resulting in a sequence of Fourier-coefficients $x'_s(k)$. For a segment of size N, the Fast Fourier Transform circuit 105 generates N Fourier coefficients.

Alternatively, other methods of calculating a Fourier transform of the signal segments may be used. Furthermore, alternatively to Fourier transforming the signal samples to the Fourier domain other transformations may be used to transform the signal segments to a different domain. Examples of such transforms include discrete cosine transforms and wavelet transforms.

The arrangement further comprises a storage medium 109 in which a secret watermark W is stored in the form of watermark samples $w(k)$. Preferably, the storage medium is a read-only memory which cannot be interrogated. Alternatively or additionally, the storage medium may include magnetic tape, optical disc, digital video disk (DVD), compact disc (CD or CD-ROM), mini-disc, hard disk, floppy disk, ferro-electric memory, electrically erasable programmable read only memory (EEPROM), flash memory, EPROM, read only memory (ROM), static random access memory (SRAM), dynamic random access memory (DRAM), synchronous dynamic random access memory (SDRAM), ferromagnetic memory, optical storage, charge coupled devices, smart cards, etc. Preferably, the watermark samples $w(k)$ correspond to a noise pattern with samples drawn from a normal distribution with mean 0 and standard deviation 1. The watermark samples $w(k)$ are multiplied by the Fourier coefficients $x'_s(k)$ by the multiplier 106, resulting in the watermark samples $w_s(k)=w(k)\cdot x'_s(k)$. Subsequently, the watermark samples $w_s(k)$ are applied to the inverse Fast Fourier transform circuit 107 which transforms the sequence of coefficients $w_s(k)$ back to the time domain, resulting in watermark segments. The multiplication circuit 108 multiplies the watermark segments with a global scaling factor $\alpha$ which is determined as a trade-off between robustness and audibility of the watermark, resulting in the scaled watermark segments $w_s'(n)$.

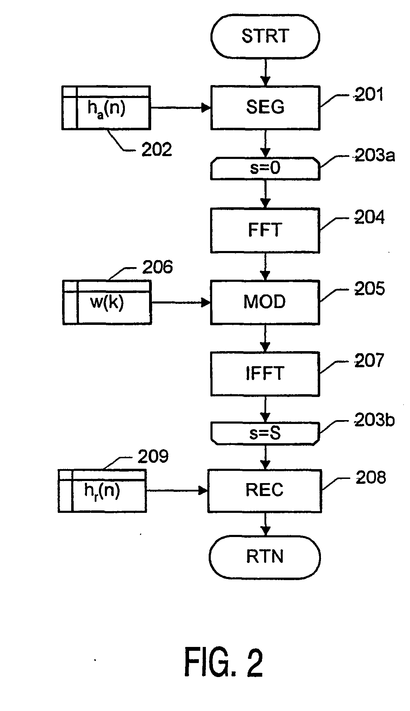

Fig. 2 shows a schematic view of a method of embedding a watermark according to an embodiment of the invention. This method may be performed by an arrangement as described in connection with figs. 1a-b. The method is initiated by a step 201 of segmenting an information signal $x(n)$ using shifted versions of an analysis window stored in a storage 202. In a following iteration, delimited by steps 203a and 203b, the resulting signal segments are processed. Hence the iteration is indexed by the segment index s. Each segment is Fast Fourier transformed (step 204). In step 205, the resulting Fourier coefficients are multiplied by a scaled watermark sequence $w(k)$ which is stored in a storage 206. In step 207, the modified coefficients are inverse Fourier transformed back into the time domain, resulting in modified signal segments. In a subsequent reconstruction step 208, the modified signal segments are reconstructed using a set of reconstruction windows stored in storage 209, resulting in the watermarked information signal.

As mentioned above, the overlap of neighbouring windows as well as the functional form of the analysis windows and the reconstruction windows may be selected individually. The particular choice of analysis and reconstruction windows depends on the particular application of interest. Figs. 3a-e show different examples of window functions according to the invention.

When the segments of the watermark signal derived for the overlapping segments are correlated with each other, it is realised that it is advantageous to use window functions which preserve the amplitude of the signal to avoid amplitude discontinuities at the segment boundaries which may cause audible distortions. The preservation of amplitudes may be achieved by using analysis and reconstruction windows which fulfil the amplitude complementary condition

$$\sum_s h_a[n-s(1-v)N] \cdot h_r[n-s(1-v)N] = 1,$$

where s is the segment index, v is the overlap parameter, and N is the segment size.

Window functions $h_a(n)$ and $h_r(n)$ satisfying this condition may be constructed from a predetermined prototype window $h_p(n)$ according to

$$h_a(n) = h_p^{(1-\beta)}(n) \qquad \text{and} \qquad h_r(n) = h_p^{\beta}(n),$$

where $\beta$ is a window shape parameter which may be chosen between 0 and 1, i.e. $\beta \in [0;1]$, and where $h_p(n)$ is normalised such that $\sum_s h_p[n-s(1-v)N] = 1$. For example, the values $\beta=1$ and $\beta=0$ result in rectangular analysis and rectangular reconstruction windows, respectively. In the general art of signal processing, it is known that rectangular analysis windows introduce distortions at the window boundaries in a Fast Fourier Transform (FFT); these distortions are known as leakage. Hence, rectangular analysis windows introduce leakage in an FFT-based watermark algorithm. Rectangular reconstruction windows, on the other hand, may introduce amplitude discontinuities and audible distortions at the window boundaries. Consequently, the choice of the window-shape factor $\beta$ is a trade-off between distortions introduced by leakage in the FFT algorithm and distortions introduced in the reconstruction. Hence, the above construction provides a possibility of tuning the shape of the analysis and reconstruction windows to provide an acceptable result in a given watermarking application, e.g. a result with small total distortions.

Now referring to figs. 3a-e, an example of a prototype window is the so-called Hanning window:

$$h_p(n) = \begin{cases} \dfrac{1}{2}(1 + \cos\dfrac{\pi n}{N}), & |n| < N \\ 0, & \text{elsewhere} \end{cases} .$$

Alternatively, other prototype window functions may be used, for example known windowing functions such as Bartlett, Hamming, or Kaiser window functions, etc.

Figs. 3a-e show analysis windows 301-305 and reconstruction windows 306-310 constructed on the basis of the Hanning window with N=2048 and an overlap v=0.5. In the example of fig. 3a, three consecutive analysis windows 301a-c and the corresponding reconstruction windows 306a-c are shown where the respective centre windows 301b and 306b are shown in dotted line. The window sequences 301 and 306 correspond to a shape parameter $\beta=0$ causing the reconstruction windows 306 to be rectangular. Fig. 3b shows corresponding analysis windows 302 and reconstruction windows 307 with a shape parameter $\beta=0.25$. Fig. 3c shows corresponding analysis windows 303 and reconstruction windows 308 with a shape parameter $\beta=0.5$ causing the analysis and reconstruction windows to have the same shape. Figs. 3d and 3e show analysis windows 304 and reconstruction windows 309 for $\beta=0.75$ and analysis windows 305 and reconstruction windows 310 for $\beta=1$, respectively.

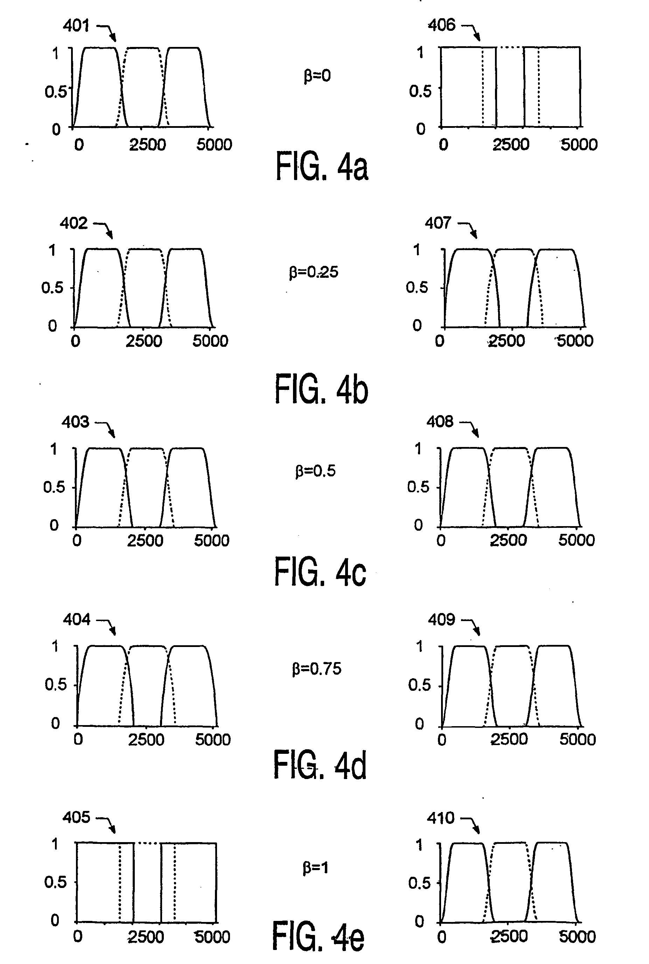

Figs. 4a-e show examples of analysis windows 401-405 and reconstruction windows 406-410 constructed on the basis of the Hanning window with N=2048. The shape parameters of the window functions in figs. 4a-e are chosen to be the same as in the respective figs. 3a-e, while the overlap parameter v is chosen to be v=0.25. A comparison of figs. 3a-e and 4a-e illustrates the effect of the overlap parameter v: The smaller value of v in figs. 4a-e causes the windows 401-410 to resemble rectangular windows more than the corresponding windows of figs. 3a-e. This is due to the above-mentioned normalisation of the prototype window functions, causing the sample values of the window functions to be scaled to 1 in the regions where there is no overlap. Other examples of overlap values include $v = 2^{-m}$ for m being, for example, equal to 4 or 5. Alternatively to the above-mentioned amplitude complementary condition, different constraints may be introduced on the analysis and reconstruction windows. For example, this may be advantageous when the audio watermarks derived for the segments by a given transform-based watermarking algorithm are uncorrelated, e.g. in the case of noise sequences independent of the audio signal. For a reconstruction using uncorrelated signals it may be advantageous to preserve the power of the signal to avoid power discontinuities at the segment boundaries.

For example, this may be the case when the watermark is defined as a noise sequence with a power depending on the power of the audio signal. A power conservation condition results in the following constraint for the analysis and reconstruction windows:

$$\sum_s h_a[n-s(1-\nu)N]^2 \cdot h_r[n-s(1-\nu)N]^2 = 1.$$

Similar to the case of the amplitude complementary condition, the analysis and reconstruction windows may be constructed on the basis of a prototype window $h_p(n)$ using a shape parameter $\beta$. An example of such a window is $h_p(n) = \sin(\pi n/N)$.

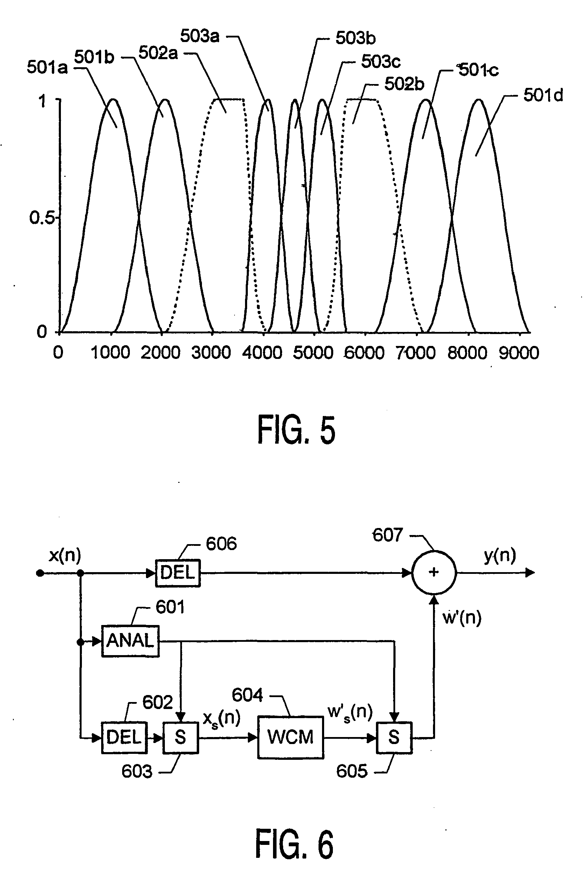

Now referring to fig. 5, according to the invention the length of the window functions may be adapted according to the contents of the information signal. For example, at locations where transients are present the segmentation may switch between window functions of two or more different lengths. As described above, the window functions may be selected to satisfy a complementary condition, and they may be constructed on the basis of a prototype window. This is illustrated in fig. 5, which shows a graph of a number of consecutive window functions based on the Hanning prototype window described in connection with figs. 3a-b with a shape parameter $\beta=1$ and an overlap parameter $\nu=0.5$. In this example, it is assumed that a transient is present around sample number 4096. Prior to the location of the transient, the segments size is switched from $N_L=2048$ of the segments 501a-b to the smaller size $N_S=1024$ of the windows 503a-c. After the transient, the window size is switched back to $N_L=2048$ of windows 501c-d. In order to fulfil the amplitude complementary condition, the switching from a large window to a small window and vice versa is performed via transition windows 502a-b, respectively. In fig. 5, the transition windows are drawn in dotted line. It is an advantage of the adaptive window switching that it reduces perceptible distortions around a location with a transient. As the frame length is reduced in the vicinity of a transient, possible distortions are spread over a shorter period, thereby reducing their perceptibility.

It is understood that, alternatively or additionally, the parameters $\beta$ and $\nu$ may be adapted in response to the contents of the information signal.

Fig. 6 shows a schematic view of an arrangement for embedding a watermark according to a second embodiment of the invention which may be used in connection with adaptive window switching described above. The arrangement comprises an analysis circuit 601 which analyses the incoming audio signal x(n) and, based on that analysis, calculates appropriate window parameters P which are applied to the segmentation circuit 603 and the reconstruction circuit 605 of the arrangement. The parameters are used by the segmentation circuit 603 for selecting a corresponding window function for the segmentation of the audio signal. The audio signal is applied to the segmentation circuit via a delay 602 in order to compensate for the time used for pre-analysing the signal x(n). After the generation of corresponding watermark segments by the watermark calculation module 604, the corresponding reconstruction circuit 605 reconstructs the watermark signal from the watermark segments using window functions corresponding to the window functions used during analysis. Finally, the watermark is added to the delayed (606) audio signal by the summing circuit 607 to obtain the watermarked signal y(n).

It should be noted that the use of adaptive window switching per se is known from "Coding of Audio Signals with Overlapping Block Transform and adaptive Window Functions" by Bernd Edler, Frequenz, 43 (1998) 9, where this technique is used in the field of audio encoding in order to spread possible audible distortions such as pre-echoes over a shorter time period, e.g. during bit rate reduction of an audio signal. However, the above prior art method uses the same window functions during segmentation and reconstruction, and the window functions fulfil certain symmetry conditions in order to ensure that the signal reconstructed from the transformed signal is the same as the original signal. The present method, on the other hand, does not require this symmetry and uses complementary window functions in order to minimise distortions introduced during the watermark embedding.

It should further be noted that even though the invention has primarily been described in connection with an audio signal, the scope of the invention is not restricted to audio signals. It is understood that the invention may also be applied to other information signals, such as multimedia signals, video signals, animations, graphics, still images, or the like.

It is further understood that the arrangement for embedding a watermark according to the invention may be implemented by any processing unit, e.g. a programmable microprocessor, an application-specific integrated circuit, or another integrated circuit, a smart card, or the like. In the claims, any reference signs placed between parentheses shall not be construed as limiting the claim. The word 'comprising' does not exclude the presence of other elements or steps than those listed in a claim. The invention can be implemented by means of hardware comprising several distinct elements, and by means of a suitably programmed computer. In a device claim enumerating several means, several of these means can be embodied by one and the same item of hardware. The mere fact that certain measures are recited in mutually different dependent claims does not indicate that a combination of these measures cannot be used to advantage.

In summary, disclosed is a method of embedding a watermark in an information signal (x(n)), such as an audio signal. The method comprises the steps of segmenting the audio signal into overlapping frames ($x_s$(n)) using a set of analysis windows ($h_a$(n)), calculating watermark segments ($w_s$'(n)) for the overlapping frames, reconstructing a watermark signal (w'(n)) from the watermark segments using a set of reconstruction windows ($h_r$(n)) which are complementary to the analysis windows, and adding the watermark signal to the information signal. The analysis and reconstruction windows may be constructed on the basis of prototype windows to fulfil predetermined complementary conditions. The analysis and reconstruction windows may be adapted to the contents of the information signal.

## Claims

1. A method of embedding a watermark in an information signal (x(n)), the method comprising the steps of
   applying a sequence of segmentation window functions ($h_a$(n)) to the information signal to obtain a first sequence of segments ($x_s$(n)) of the information signal, where each segmentation window function has a predetermined length and a predetermined shape;
   embedding a predetermined watermark (w(k))i in at least a first segment of the first sequence of segments ($x_s$(n)) resulting in a sequence of watermark segments ($w'_s$(n));
   combining the watermark segments of the sequence of watermark segments ($w'_s$(n)) to a watermark signal (w'(n)) using a sequence of reconstruction window functions ($h_r$(n)), and
   combining the watermark signal (w'(n)) with the information signal (x(n)) to obtain a watermarked information signal (y(n)),
   **characterized in that** two successive segmentation window functions overlap by a predetermined overlap length, and that the segmentation window function ($h_a$(n)) and the reconstruction window function ($h_r$(n)) are selected individually and fulfill the condition:

$$\sum_s h_a[n-s(1-\nu)N]^2 \cdot h_r[n-s(1-\nu)N]^2 = 1,$$

   wherein s is the segment index, $\nu$ the overlap parameter and N the segment size.

2. A method according to claim 1, wherein the segmentation window functions and the reconstruction window functions are constructed from a prototype window function and shaped according to at least one shape parameter ($\beta$).

3. A method according to claim 1, wherein the length of at least a first segmentation window function is adapted in response to the content of the information signal, the length being shortened when a transient is present in the information signal.

4. A method according to claim 1, wherein the respective shapes of at least a second segmentation window function and at least a first reconstruction window function are shortered when a transient is present in the information signal.

5. A method according to claim 1, further comprising the steps of
   transforming the first segment to obtain a first sequence of coefficients ($x_s$'(k));
   modifying the first sequence of coefficients as a function of the predetermined watermark to obtain a sequence of modified coefficients ($w_s$(k)); and
   inversely transforming the sequence of modified coefficients to obtain a first watermark segment.

6. A method according to claim 1, wherein the information signal comprises a multimedia signal selected from the class of multimedia signals including audio signals, still image signals, and video signals.

7. An arrangement for embedding a watermark in an information signal (x(n)), the arrangement comprising
   means (101) for applying a sequence of segmentation window functions ($h_a$(n)) to the information signal to obtain a first sequence of segments ($x_s$(n)) of the information signal, where each segmentation window function has a predetermined length and a predetermined shape;
   means (102) for embedding a predetermined watermark (w(k)) in at least a first segment of the first sequence of segments resulting in a sequence of watermark segments ($w'_s$(n));
   means (103) for combining the watermark segments of the sequence of watermark segments ($w'_s$(n)) to a watermark signal (w'(n)) using a sequence of reconstruction window functions (w'(n)); and

means (104) for combining the watermark signal (w'(n)) with the information signal (x(n)), to obtain a watermarked information signal (y(n)),

**characterized in that** two successive segmentation window functions overlap by a predetermined overlap length and that the segmentation window function ($h_a(n)$) and the reconstruction window function ($h_r(n)$) are selected individually and fulfill the condition:

$$\sum_s h_a[n\text{-}s(1\text{-}v)N]^2 \cdot h_r[n\text{-}s(1\text{-}v)N]^2 = 1,$$

wherein s is the segment index, $v$ the overlap parameter and N the segment size.

8. An information signal having an embedded watermark, wherein the information signal has been generated by applying a sequence of segmentation window functions ($h_a(n)$) to a source signal (x(n)) to obtain a first sequence of segments ($x_s(n)$) of the source signal, where each segmentation window function has a predetermined length and a predetermined shape;
embedding a predetermined watermark (w(k)) in at least a first segment of the first sequence of segments ($x_s(n)$) resulting in a sequence of watermark segments ($w'_s(n)$);
combining the watermark segments of the sequence of watermark segments ($w'_s(n)$) to a watermark signal (w'(n)) using a sequence of reconstruction window functions ($h_r(n)$); and
combining the watermark signal (w'(n)) with the source signal (x(n)) to obtain the information signal having an embedded watermark (y(n)),
**characterized in that** two successive segmentation window functions overlap by a predetermined overlap length and that the segmentation window function ($h_a(n)$) and the reconstruction window function ($h_r(n)$) are selected individually and fulfill the condition:

$$\sum_s h_a[n\text{-}s(1\text{-}v)N]^2 \cdot h_r[n\text{-}s(1\text{-}v)N]^2 = 1,$$

wherein s is the segment index, $v$ the overlap parameter and N the segment size.

9. A storage medium having recorded thereon an information signal according to claim 8.

10. A device for transmitting an information signal (x(n)) the device comprising an arrangement for embedding a watermark in the information signal, the arrangement including
means for applying a sequence of segmentation window functions ($h_a(n)$) to the information signal to obtain a first sequence of segments ($x_s(n)$) of the information signal, where each segmentation window function has a predetermined length and a predetermined shape;
means for embedding a predetermined watermark (w(k)) in at least a first segment of the first sequence of segments resulting in a sequence of watermark segments ($w'_s(n)$);
means for combining the watermark segments of the sequence of watermark segments to a watermark signal (w'(n)) using a sequence of reconstruction window functions ($h_r(n)$) and
means for combining the watermark signal (w'(n)) with the information signal (x(n)) to obtain a watermarked information signal (y(n)),
**characterized in that** two successive segmentation window functions overlap by a predetermined overlap length and that the segmentation window function ($h_a(n)$) and the reconstruction window function ($h_r(n)$) are selected individually and fulfill the condition:

$$\sum_s h_a[n\text{-}s(1\text{-}v)N]^2 \cdot h_r[n\text{-}s(1\text{-}v)N]^2 = 1,$$

wherein is the segment index, $v$ the overlap parameter and N the segment size.

**Patentansprüche**

1. Verfahren zum Einbetten eines Wasserzeichens in ein Informationssignal (x(n)), wobei das Verfahren folgende Schritte umfasst:

   Anwenden einer Sequenz von Segmentierungsfensterfunktionen ($h_a$(n)) auf das Informationssignal, um eine erste Sequenz von Segmenten ($x_s$(n)) des Informationssignals zu erhalten, wobei jede Segmentierungsfensterfunktionen eine vorgegebene Länge und eine vorgegebene Form hat;
   Einbetten eines vorgegebenen Wasserzeichens (w(k))i in mindestens ein erstes Segment der ersten Sequenz von Segmenten ($x_s$(n)), was zu einer Sequenz von Wasserzeichensegmenten ($w'_s$(n)) führt;
   Kombinieren der Wasserzeichensegmente der Sequenz von Wasserzeichensegmenten ($w'_s$(n)) zu einem Wasserzeichensignal (w'(n)) unter Verwendung einer Sequenz von Rekonstruktionsfensterfunktionen ($h_r$(n)); und
   Kombinieren des Wasserzeichensignals (w'(n)) mit dem Informationssignal (x(n)), um ein mit einem Wasserzeichen versehenes Informationssignal (y(n)) zu erhalten,

   **dadurch gekennzeichnet, dass** sich zwei aufeinanderfolgende Segmentierungsfensterfunktionen um eine zuvor festgelegte Überlappungslänge überlappen, und dass die Segmentierungsfensterfunktion ($h_a$(n)) und die Rekonstruktionsfensterfunktion ($h_r$(n)) einzeln ausgewählt werden und folgende Bedingung erfüllen:

$$\sum_s h_a\big[n - s(1-v)N\big]^2 \cdot h_r\big[n - s(1-v)N\big]^2 = 1,$$

   wobei s der Segmentindex, $v$ der Überlappungsparameter und N die Segmentgröße ist.

2. Verfahren nach Anspruch 1, wobei die Segmentierungsfensterfunktionen und Rekonstruktionsfensterfunktionen anhand einer Prototypfensterfunktion konstruiert und gemäß mindestens einem Formparameter ($\beta$) geformt werden.

3. Verfahren nach Anspruch 1, wobei die Länge mindestens einer ersten Segmentierungsfensterfunktion in Reaktion auf den Inhalt des Informationssignals angepasst werden kann und die Länge gekürzt wird, wenn ein Transient im Informationssignal vorhanden ist.

4. Verfahren nach Anspruch 1, wobei die jeweiligen Formen mindestens einer zweiten Segmentierungsfensterfunktion und mindestens einer ersten Rekonstruktionsfensterfunktion gekürzt werden, wenn ein Transient im Informationssignal vorhanden ist.

5. Verfahren nach Anspruch 1, das weiterhin folgende Schritte umfasst:

   Transformieren des ersten Segments, um eine erste Sequenz von Koeffizienten ($x_s$'(k)) zu erhalten;
   Modifizieren der ersten Sequenz von Koeffizienten als eine Funktion des vorgegebenen Wasserzeichens, um eine Sequenz modifizierter Koeffizienten ($w_s$(k)) zu erhalten; und
   inverses Transformieren der Sequenz modifizierter Koeffizienten, um ein erstes Wasserzeichensegment zu erhalten.

6. Verfahren nach Anspruch 1, wobei das Informationssignal ein Multimediasignal umfasst, das aus der Klasse der Multimediasignale, einschließlich Audiosignale, Standbildsignale und Videosignale, ausgewählt wurde.

7. Anordnung zum Einbetten eines Wasserzeichens in ein Informationssignal (x(n)), wobei die Anordnung Folgendes umfasst:

   Mittel (101), um eine Sequenz von Segmentierungsfensterfunktionen ($h_a$(n)) auf das Informationssignal anzuwenden, um eine erste Sequenz von Segmenten ($x_s$(n)) des Informationssignals zu erhalten, wo jede Segmentierungsfensterfunktion eine vorgegebene Länge und eine vorgegebene Form hat;
   Mittel (102), um ein vorgegebenes Wasserzeichen (w(n)) in mindestens ein erstes Segment der ersten Sequenz von Segmenten einzubetten, was zu einer Sequenz von Wasserzeichensegmenten ($w'_s$(n)) führt;
   Mittel (103), um unter Verwendung einer Sequenz von Rekonstruktionsfensterfunktionen ($h_r$(n)) die Wasserzeichensegmente der Sequenz von Wasserzeichensegmenten ($w'_s$(n)) mit einem Wasserzeichensignal (w'(n)) zu kombinieren; und

Mittel (104), um das Wasserzeichensignal (w'(n)) mit dem Informationssignal (x(n)) zu kombinieren, um ein mit einem Wasserzeichen versehenes Informationssignal (y(n)) zu erhalten,

**dadurch gekennzeichnet, dass** sich zwei aufeinanderfolgende Segmentierungsfensterfunktionen um eine zuvor festgelegte Überlappungslänge überlappen, und dass die Segmentierungsfensterfunktion ($h_a$(n)) und die Rekonstruktionsfensterfunktion ($h_r$(n)) einzeln ausgewählt werden und folgende Bedingung erfüllen:

$$\sum_s h_a\big[n - s(1-v)N\big]^2 \cdot h_r\big[n - s(1-v)N\big]^2 = 1,$$

wobei s der Segmentindex, $v$ der Überlappungsparameter und N die Segmentgröße ist.

**8.** Informationssignal mit einem eingebetteten Wasserzeichen, wobei das Informationssignal durch Anwenden einer Sequenz von Segmentierungsfensterfunktionen ($h_a$(n)) auf ein Quellensignal (x(n)) erzeugt wurde, um eine erste Sequenz von Segmenten ($x_s$(n)) des Quellensignal zu erhalten, wo jede Segmentierungsfensterfunktionen eine vorgegebene Länge und eine vorgegebene Form hat;
Einbetten eines vorgegebenen Wasserzeichens (w(k)) in mindestens ein erstes Segment der ersten Sequenz von Segmenten ($x_s$(n)), was zu einer Sequenz von Wasserzeichensegmenten ($w'_s$(n)) führt;
Kombinieren der Wasserzeichensegmente der Sequenz von Wasserzeichensegmenten ($w'_s$(n)) zu einem Wasserzeichensignal (w'(n)) unter Verwendung einer Sequenz von Rekonstruktionsfensterfunktionen ($h_r$(n)); und
Kombinieren des Wasserzeichensignals (w'(n)) mit dem Quellensignal (x(n)), um das Informationssignal mit einem eingebetteten Wasserzeichen (y(n)) zu erhalten,
**dadurch gekennzeichnet, dass** sich zwei aufeinanderfolgende Segmentierungsfensterfunktionen um eine zuvor festgelegte Überlappungslänge überlappen, und dass die Segmentierungsfensterfunktion ($h_a$(n)) und die Rekonstruktionsfensterfunktion ($h_r$(n)) einzeln ausgewählt werden und folgende Bedingung erfüllen:

$$\sum_s h_a\big[n - s(1-v)N\big]^2 \cdot h_r\big[n - s(1-v)N\big]^2 = 1,$$

wobei s der Segmentindex, $v$ der Überlappungsparameter und N die Segmentgröße ist.

**9.** Speichermedium, auf dem ein Informationssignal gemäß Anspruch 8 aufgezeichnet ist.

**10.** Vorrichtung zum Übertragen eines Informationssignals (x(n)), wobei die Vorrichtung eine Anordnung zum Einbetten eines Wasserzeichens in das Informationssignal umfasst, wobei die Anordnung Folgendes umfasst:

Mittel, um eine Sequenz von Segmentierungsfensterfunktionen ($h_a$(n)) auf das Informationssignal anzuwenden, um eine erste Sequenz von Segmenten ($x_s$(n)) zu erhalten, wo jede Segmentierungsfensterfunktion eine vorgegebene Länge und eine vorgegebene Form hat;
Mittel, um ein vorgegebenes Wasserzeichen (w(n)) in mindestens ein erstes Segment der ersten Sequenz von Segmenten einzubetten, was zu einer Sequenz von Wasserzeichensegmenten ($w'_s$(n)) führt;
Mittel, um unter Verwendung einer Sequenz von Rekonstruktionsfensterfunktionen ($h_r$(n)) die Wasserzeichensegmente der Sequenz von Wasserzeichensegmenten ($w'_s$(n)) mit einem Wasserzeichensignal (w'(n)) zu kombinieren; und
Mittel, um das Wasserzeichensignal (w'(n)) mit dem Informationssignal (x(n)) zu kombinieren und ein mit einem Wasserzeichen versehenes Informationssignal (y(n)) zu erhalten,

**dadurch gekennzeichnet, dass** sich zwei aufeinanderfolgende Segmentierungsfensterfunktionen um eine zuvor festgelegte Überlappungslänge überlappen, und dass die Segmentierungsfensterfunktion ($h_a$(n)) und die Rekonstruktionsfensterfunktion ($h_r$(n)) einzeln ausgewählt werden und folgende Bedingung erfüllen:

$$\sum_s h_a\big[n - s(1-v)N\big]^2 \cdot h_r\big[n - s(1-v)N\big]^2 = 1,$$

wobei s der Segmentindex, $v$ der Überlappungsparameter und N die Segmentgröße ist.

**Revendications**

1. Procédé pour intégrer un filigrane dans un signal d'informations (x(n)), le procédé comprenant les étapes suivantes:

   appliquer une séquence de fonctions de fenêtre de segmentation ($h_s$(n)) au signal d'informations afin d'obtenir une première séquence de segments ($x_s$(n)) du signal d'informations, sachant que chaque fonction de fenêtre de segmentation présente une longueur prédéterminée et une forme prédéterminée;
   intégrer un filigrane prédéterminé (w(k)) dans au moins un premier segment de la première séquence de segments ($x_s$(n)) ce qui donne une séquence de segments de filigrane (w'$_s$(n));
   combiner les segments de filigrane de la séquence de segments de filigrane (w'$_s$(n)) en un signal de filigrane (w'(n)) utilisant une séquence de fonctions de fenêtre de reconstruction ($h_r$(n)), et
   combiner le signal de filigrane (w'(n)) avec le signal d'informations (x(n)) pour obtenir un signal d'informations filigrané (y(n)),

   **caractérisé en ce que** deux fonctions de fenêtre de segmentation successives se chevauchent d'une longueur de chevauchement prédéterminée, et **en ce que** la fonction de fenêtre de segmentation ($h_a$(n)) et la fonction de fenêtre de reconstruction ($h_r$(n)) sont sélectionnées individuellement et remplissent la condition suivante:

$$\sum_s h_a[n\text{-}s(1\text{-}v)N]^2 \cdot h_r[n\text{-}s(1\text{-}v)N]^2 = 1,$$

   où s est l'index de segment, v est le paramètre de chevauchement et N est la taille de segment.

2. Procédé suivant la revendication 1, dans lequel les fonctions de fenêtres de segmentation et les fonctions de fenêtre de reconstruction sont construites à partir d'une fonction de fenêtre prototype et façonnées conformément à au moins un paramètre de forme ($\beta$).

3. Procédé suivant la revendication 1, dans lequel la longueur d'au moins une première fonction de fenêtre de segmentation est adaptée en réponse au contenu du signal d'informations, la longueur étant raccourcie lorsqu'une transitoire est présente dans le signal d'informations.

4. Procédé suivant la revendication 1, dans lequel, les formes respectives d'au moins une seconde fonction de fenêtre de segmentation et d'au moins une première fonction de fenêtre de reconstruction sont raccourcies lorsqu'une transitoire est présente dans le signal d'informations.

5. Procédé suivant la revendication 1, comprenant en outre les étapes suivantes:

   transformer le premier segment en vue d'obtenir une première séquence de coefficients ($x_s$'(k));
   modifier la première séquence de coefficients en fonction du filigrane prédéterminé pour obtenir une séquence de coefficients modifiés ($w_s$(k));
   transformer en inverse la séquence de coefficients modifiés en vue d'obtenir un premier segment de filigrane.

6. Procédé suivant la revendication 1, dans lequel le signal d'informations comprend un signal de multimédia sélectionné dans la classe de signaux de multimédia comprenant des signaux audio, des signaux d'images fixes et des signaux vidéo.

7. Montage pour intégrer un filigrane dans un signal d'informations (x(n)), le montage comprenant:

   un moyen (101) pour appliquer une séquence de fonctions de fenêtre de segmentation ($h_s$(n)) au signal d'informations afin d'obtenir une première séquence de segments ($x_s$(n)) du signal d'informations, sachant que chaque fonction de fenêtre de segmentation présente une longueur prédéterminée et une forme prédéterminée;
   un moyen (102) pour intégrer un filigrane prédéterminé (w(k)) dans au moins un premier segment de la première séquence de segments ($x_s$(n))' ce qui donne une séquence de segments de filigrane (w'$_s$(n));
   un moyen (103) pour combiner les segments de filigrane de la séquence de segments de filigrane (w'$_s$(n)) en un signal de filigrane (w'(n)) utilisant une séquence de fonctions de fenêtre de reconstruction ($h_r$(n)), et
   un moyen (104) pour combiner le signal de filigrane (w'(n)) avec le signal d'informations (x(n)) pour obtenir un signal d'informations filigrané (y(n)),

**caractérisé en ce que** deux fonctions de fenêtre de segmentation successives se chevauchent d'une longueur de chevauchement prédéterminée, et **en ce que** la fonction de fenêtre de segmentation ($h_a(n)$) et la fonction de fenêtre de reconstruction ($h_r(n)$) sont sélectionnées individuellement et remplissent la condition suivante:

$$\sum_s h_a[n-s(1-v)N]^2 \cdot h_r[n-s(1-v)N]^2 = 1,$$

où s est l'index de segment, v est le paramètre de chevauchement et N est la taille de segment.

8. Signal d'informations comportant un filigrane intégré, dans lequel le signal d'informations a été généré en appliquant une séquence de fonctions de fenêtres de segmentation ($w(k)$) à un signal de source ($x(n)$) en vue d'obtenir une première séquence de segments ($x_s(n)$) du signal de source, chaque fonction de fenêtre de segmentation ayant une longueur prédéterminée et une forme prédéterminée,

en intégrant un filigrane prédéterminé ($w(k)$) dans au moins un premier segment de la première séquence de segments ($x_s(n)$) ce qui donne une séquence de segments de filigrane ($w'_s(n)$);
en combinant les segments de filigrane de la séquence de segments de filigrane ($w'_s(n)$) en un signal de filigrane ($w'(n)$) utilisant une séquence de fonctions de fenêtre de reconstruction ($h_r(n)$), et
en combinant le signal de filigrane ($w'(n)$) avec le signal de source ($x(n)$) en vue d'obtenir un filigrane intégré ($y(n)$),
**caractérisé en ce que** deux fonctions de fenêtre de segmentation successives se chevauchent d'une longueur de chevauchement prédéterminée, et **en ce que** la fonction de fenêtre de segmentation ($h_a(n)$) et la fonction de fenêtre de reconstruction ($h_r(n)$) sont sélectionnées individuellement et remplissent la condition suivante:

$$\sum_s h_a[n-s(1-v)N]^2 \cdot h_r[n-s(1-v)N]^2 = 1,$$

où s est l'index de segment, v est le paramètre de chevauchement et N est la taille de segment.

9. Support de stockage sur lequel est enregistré un signal d'informations suivant la revendication 8.

10. Dispositif pour transmettre un signal d'information ($x(n)$), le dispositif comprenant un montage pour intégrer un filigrane dans le signal d'informations, le montage comprenant:

    un moyen pour appliquer une séquence de fonctions de fenêtre de segmentation ($h_s(n)$) au signal d'informations afin d'obtenir une première séquence de segments ($x_s(n)$) du signal d'informations, sachant que chaque fonction de fenêtre de segmentation présente une longueur prédéterminée et une forme prédéterminée;
    un moyen pour intégrer un filigrane prédéterminé ($w/k$) dans au moins un premier segment de la première séquence de segments ($x_s(n)$) ce qui donne une séquence de segments de filigranes ($w'_s(n)$);
    un moyen pour combiner les segments de filigrane de la séquence de segments de filigrane ($w'_s(n)$) en un signal de filigrane ($w'(n)$) utilisant une séquence de fonctions de fenêtre de reconstruction ($h_r(n)$), et
    un moyen pour combiner le signal de filigrane ($w'(n)$) avec le signal d'informations ($x(n)$) pour obtenir un signal d'informations filigrane ($y(n)$),

**caractérisé en ce que** deux fonctions de fenêtre de segmentation successives se chevauchent d'une longueur de chevauchement prédéterminée, et **en ce que** la fonction de fenêtre de segmentation ($h_a(n)$) et la fonction de fenêtre de reconstruction ($h_r(n)$) sont sélectionnées individuellement et remplissent la condition suivante:

$$\sum_s h_a[n-s(1-v)N]^2 \cdot h_r[n-s(1-v)N]^2 = 1.$$

où s est l'index de segment, v est le paramètre de chevauchement et N est la taille de segment.

FIG. 1a

FIG. 1b

FIG. 2

**FIG. 3a**

β=0

**FIG. 3b**

β=0.25

**FIG. 3c**

β=0.5

**FIG. 3d**

β=0.75

β=1

**FIG. 3e**

FIG. 4a

β=0

FIG. 4b

β=0.25

FIG. 4c

β=0.5

FIG. 4d

β=0.75

FIG. 4e

β=1

**FIG. 5**

**FIG. 6**